# EUROPEAN PATENT APPLICATION

(11) **EP 4 773 060 A1**
(43) Date of publication of application: **08.07.2026**
(21) Application number: 26150653.9
(22) Date of filing: 07.01.2026
(51) Int. Cl.: G06Q 20/32, G06F 21/44, H04L 9/40, H04W 12/06

(54) **SYSTEMS AND METHODS FOR REDUCING FRICTION THROUGH MOBILE DEVICE TRUST LEVELS**

(30) Priority: 07.01.2025 US 202563742708 P; 05.01.2026 US 202619440400
(71) Applicant: JPMorgan Chase Bank, N.A., New York, NY 10179 (US)
(72) Inventor: Banala, Sandeep Reddy, New York, 10179 (US); Loncaric, Goran, New York, 10179 (US); More, Bipin, New York, 10179 (US)
(74) Representative: Patentanwälte Olbricht Buchhold Keulertz

(57) **Abstract**

A method may include: receiving a registration of a mobile device for a user; adding the mobile device to a user profile associated with the user; establishing a first trust level based on activity with a mobile application, wherein the first trust level allows the user to execute a first action that requires the first trust level without additional authentication; receiving user identity verification from the mobile application; establishing a second trust level for the first mobile device based on the user identity verification, wherein the second trust level allows the user to execute a second action that requires the second or the first trust level without additional authentication; receiving a removal of the first mobile device from the user profile; and revoking the second trust level and the first trust level from the first mobile device.

## Description

### RELATED APPLICATIONS

This application claims priority to, and the benefit of, U.S. Provisional Patent Application Ser. No. 63/742,708, filed January 7, 2025, the disclosure of which is hereby incorporated, by reference, in its entirety.

### BACKGROUND OF THE INVENTION

### 1. Field of the Invention

Embodiments relate to systems and methods for reducing friction using mobile device trust levels.

### 2. Description of the Related Art

Customers of financial institutions often have to go through multiple friction points post-login in order to complete a transaction. For example, even a well-established customer may need to provide out-of-band authentication, such as entry of a one-time passcode, responding to a text message, etc. Thus, creates friction for the customer, and may lead to dropped transactions.

### SUMMARY OF THE INVENTION

Systems and methods for reducing friction using mobile device trust levels are disclosed. In an embodiment, a method may include: receiving, by a backend computer program executed by an electronic device, a registration of a first mobile device for a user, wherein the first mobile device executes a mobile application; adding, by the backend computer program, the first mobile device to a user profile associated with the user; establishing, by the backend computer program, a first mobile device trust level for the first mobile device based on activity with the mobile application, wherein the first mobile device trust level allows the user to execute a first action that requires the first mobile device trust level without additional authentication; receiving, by the backend computer program, user identity verification from the mobile application; establishing, by the backend computer program, a second mobile device trust level for the first mobile device based on the user identity verification, wherein the second mobile device trust level allows the user to execute a second action that requires the second mobile device trust level or the first mobile device trust level without additional authentication; receiving, by the backend computer program, a removal of the first mobile device from the user profile; and revoking, by the backend computer program, the second mobile device trust level and the first mobile device trust level from the first mobile device, wherein executing the first action or the second action requires additional authentication.

In an embodiment, the user identity verification may include: receiving an image of the user; and verifying the image of the user against an image of the user on a government issued identification.

In an embodiment, the method may also include receiving, by the backend computer program, financial instrument verification from the mobile application; and establishing, by the backend computer program, a third mobile device trust level for the first mobile device based on the financial instrument verification, wherein the third mobile device trust level allows the user to execute a third action that requires the third mobile device trust level, the second mobile device trust level, or the first mobile device trust level without additional authentication.

In an embodiment, the financial instrument verification may include receiving financial instrument information for a financial instrument, and receiving confirmation that the financial instrument information matches financial instrument information for an issued financial instrument, wherein the financial instrument information may include at least part of a financial instrument number for a financial instrument, a card verification value for the financial instrument, and/or an expiration of the financial instrument.

In an embodiment, the financial instrument information may be received by near field communication.

In an embodiment, the method may also include establishing, by the backend computer program, a fourth mobile device trust level for the first mobile device based on a passage of time, wherein the fourth mobile device trust level allows the user to execute a fourth action that requires the fourth mobile device trust level, the third mobile device trust level, the second mobile device trust level, or the first mobile device trust level without additional authentication.

In an embodiment, the method may also include: receiving, by the backend computer program, a registration of a second mobile device for the user; adding, by the backend computer program, the second mobile device to the user profile; and transferring, by the backend computer program, the second mobile device trust level to the second mobile device in response to the second mobile device receiving data from the first mobile device by cloud backup or directly from the first mobile device.

In an embodiment, the method may also include: receiving, by the backend computer program, a registration of a second mobile device for the user; adding, by the backend computer program, the second mobile device to the user profile; and transferring, by the backend computer program, the second mobile device trust level to the second mobile device in response to a passage of a certain amount of time.

In an embodiment, the method may also include revoking, by the backend computer program, the second mobile device trust level and the first mobile device trust level in response to the backend computer program identifying the first mobile device as being jailbroken or having malware installed.

In an embodiment, the method may also include depreciating, by the backend computer program, the second mobile device trust level to the first mobile device trust level in response to a certain number of failed logins to the mobile application.

According to another embodiment, a system may include a backend computer program executed by an electronic device; and a first mobile device for a user executing a mobile application. The backend computer program may be configured to: receive, from the mobile application executed by the first mobile device, registration of the first mobile device; add the first mobile device to a user profile for the user; establish a first mobile device trust level for the first mobile device based on activity with the mobile application, wherein the first mobile device trust level allows the user to execute a first action that requires the first mobile device trust level without additional authentication; receive user identity verification from the mobile application; establish a second mobile device trust level for the first mobile device based on the user identity verification, wherein the second mobile device trust level allows the user to execute a second action that requires the second mobile device trust level or the first mobile device trust level without additional authentication; receive a removal of the first mobile device from the user profile; and revoke the second mobile device trust level and the first mobile device trust level from the first mobile device, wherein executing the first action or the second action requires additional authentication.

In an embodiment, the user identity verification may include: receiving an image of the user; and verifying the image of the user against an image of the user on a government issued identification.

In an embodiment, the backend computer program may be configured to: receive financial instrument verification from the mobile application; and establish a third mobile device trust level for the first mobile device based on the financial instrument verification, wherein the third mobile device trust level allows the user to execute a third action that requires the third mobile device trust level, the second mobile device trust level, or the first mobile device trust level without additional authentication.

In an embodiment, the financial instrument verification may include receiving financial instrument information for a financial instrument, and receiving confirmation that the financial instrument information matches financial instrument information for an issued financial instrument, wherein the financial instrument information may include at least part of a financial instrument number for a financial instrument, a card verification value for the financial instrument, and/or an expiration of the financial instrument.

In an embodiment, the financial instrument information may be received by near field communication.

In an embodiment, the backend computer program may be further configured to establish a fourth mobile device trust level for the first mobile device based on a passage of time, wherein the fourth mobile device trust level allows the user to execute a fourth action that requires the fourth mobile device trust level, the third mobile device trust level, the second mobile device trust level, or the first mobile device trust level without additional authentication.

In an embodiment, the backend computer program may be configured to: receive a registration of a second mobile device for the user; add the second mobile device to the user profile; and transfer the second mobile device trust level to the second mobile device in response to the second mobile device receiving data from the first mobile device by cloud backup or directly from the first mobile device.

In an embodiment, wherein the backend computer program may be configured to: receive a registration of a second mobile device for the user; add the second mobile device to the user profile; and transfer the second mobile device trust level to the second mobile device in response to a passage of a certain amount of time.

In an embodiment, the backend computer program may be configured to revoke the second mobile device trust level and the first mobile device trust level in response to the backend computer program identifying the first mobile device as being jailbroken or having malware installed, or to depreciate the second mobile device trust level to the first mobile device trust level in response to a certain number of failed logins to the mobile application.

According to another embodiment, a non-transitory computer readable storage medium may include instructions stored thereon, which when read and executed by one or more computer processors, cause the one or more computer processors to perform steps comprising: receiving a registration of a first mobile device for a user, wherein the first mobile device executes a mobile application; adding the first mobile device to a user profile for the user; establishing a first mobile device trust level for the first mobile device based on activity with the mobile application, wherein the first mobile device trust level allows the user to execute a first action that requires the first mobile device trust level without additional authentication; receiving user identity verification from the mobile application; establishing a second mobile device trust level for the first mobile device based on the user identity verification, wherein the second mobile device trust level allows the user to execute a second action that requires the second mobile device trust level or the first mobile device trust level without additional authentication; receiving a removal of the first mobile device from the user profile; and revoking the second mobile device trust level and the first mobile device trust level from the first mobile device, wherein execution of the first action or the second action requires additional authentication.

### BRIEF DESCRIPTION OF THE DRAWINGS

For a more complete understanding of the present invention, the objects and advantages thereof, reference is now made to the following descriptions taken in connection with the accompanying drawings in which:
FIG. 1 illustrates a system for reducing friction using mobile device trust levels according to an embodiment;
FIGS. 2A and 2B illustrate a method for managing mobile device trust levels according to an embodiment;
FIG. 3 illustrates a method for reducing friction using mobile device trust levels according to an embodiment;
FIG. 4 depicts an exemplary computing system for implementing aspects of the present disclosure.

### DETAILED DESCRIPTION OF PREFERRED EMBODIMENTS

Embodiments relate to systems and methods for reducing friction using mobile device trust levels.

In order to reduce the multiple friction points that customers encounter, embodiments may modify the mobile device trust level based on customer actions. The mobile device trust level may be specific to an electronic device, such as a mobile electronic device.

Embodiments may model customer actions and may modify the mobile device trust level based on those actions. For example, as customers interact in a way that increases trust, the mobile device trust level may increase. If the customer interacts in a way that decreases the mobile device trust level, the mobile device trust level may be reset or may be decreased.

The different mobile device levels of trust may eliminate friction points (e.g., additional verifications, such as out of band verification) before the certain actions or transactions are executed. The current mobile device level of trust may be compared to a required mobile device level of trust for the action or transaction, and if the current mobile device level of trust meets or exceeds the required mobile device level of trust, the friction point may be removed.

For example, with each increasing mobile device trust level, a transaction amount threshold before requiring additional authentication may increase.

If the user loses the mobile device and removes it from the user's profile, the mobile device trust level may be revoked and/or reset to the initial mobile device trust level.

In an embodiment, the mobile device trust level may be transferred from one trusted device to another. For example, if a new mobile device is purchased and a backup from the prior mobile device installed, the mobile device trust level may be transferred to the new mobile device.

In another embodiment, the mobile device trust level may be transferred to a new device after a period of time has passed (e.g., 90 days) without the mobile device trust level being decreased or reset.

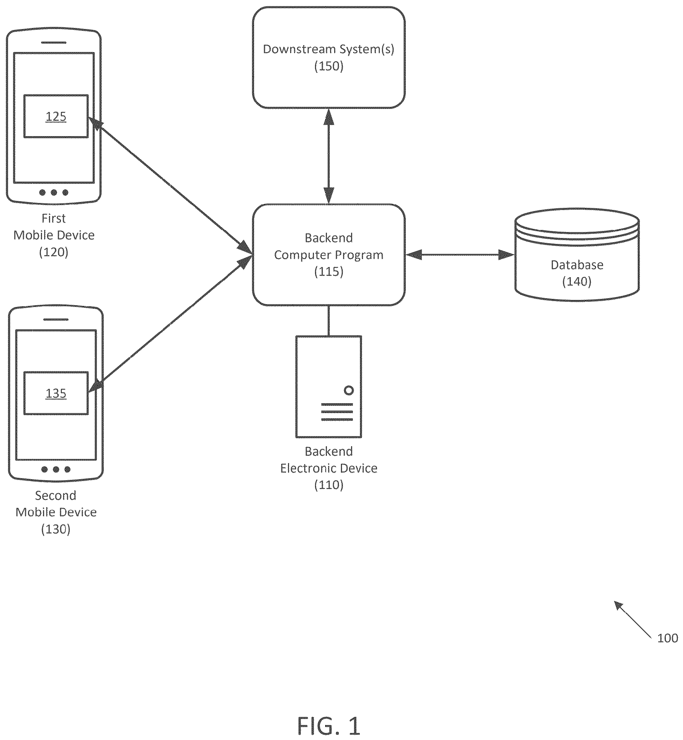

Referring to FIG. 1, a system for reducing friction using mobile device trust levels is disclosed according to an embodiment. System 100 may include backend electronic device 110, which may be a server (e.g., physical and/or cloud-based), a computer, etc. Backend electronic device 110 may be provided by an entity, such as a financial institution, that uses trust in the user to make decisions on user actions.

Backend electronic device 110 may execute backend computer program 115 that may manage mobile device trust levels for user mobile electronic devices, such as first mobile device 120 and second mobile device 130.

First mobile device 120 and second mobile device 130 may execute mobile applications 125 and 135, respectively, that may be provided by the entity. Mobile applications 125 and 135 may interface with backend computer program 115.

System 100 may further include database 140 that may store user profiles and may store mobile device trust levels for user mobile devices, such as first mobile device 120 and second mobile device 130.

Downstream systems 150 may use the mobile device trust levels to determine an amount of additional authentication that may be required. With each increasing level of mobile device trust, the trust in the associated mobile device is increased. This may allow the user of the mobile device to bypass certain authentication requirements for certain activities. In general, the higher the mobile device trust level, the less additional authentication, if any, is required.

In an embodiment, an (e.g., each) activity (e.g., billpay, self-service account management, transactions, rewards redemption, etc.) may have one or more required levels of trust for the initiating mobile device; if the required level of trust is not met, additional authentication may be required.

Examples of downstream systems 150 may include transaction authorization system, billpay systems, account management systems, wallet provisioning systems, rewards redemption services, etc.

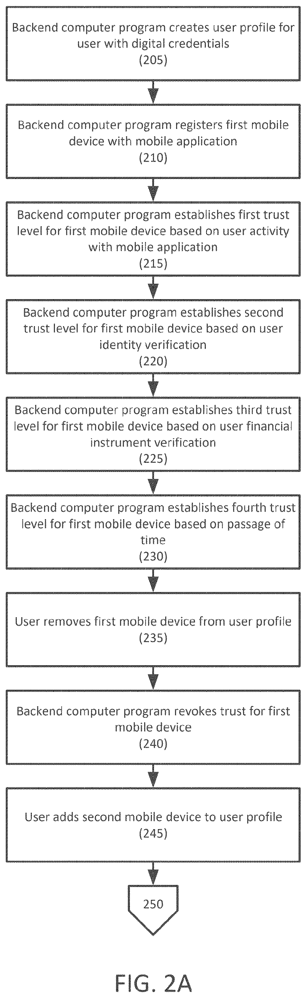

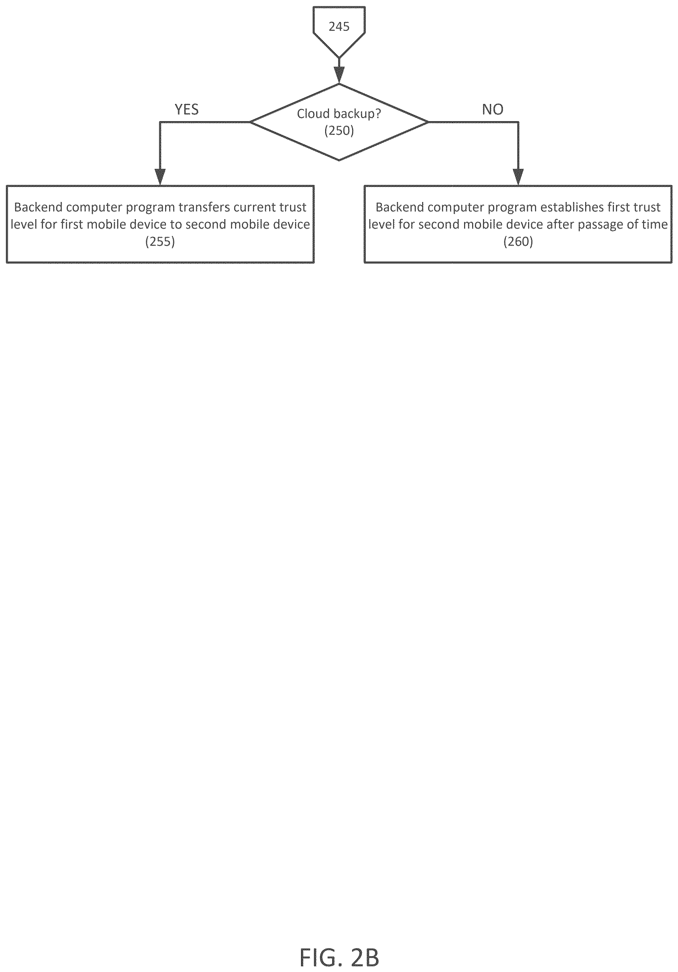

Referring to FIGS. 2A and 2B, a method for managing mobile device trust levels is disclosed according to an embodiment.

At 205, a backend computer program may create a user profile for a user, and may issue the user digital credentials, such as a username and password. For example, the backend computer program may perform any necessary user identification checks, such as Know Your Customer (KYC) checks, challenge authentication, etc.

At 210, the backend computer program may receive a registration of a first mobile device with the backend. For example, the user may download a mobile application associated with the backend, and may add the first mobile device to the user's profile.

In an embodiment, the backend computer program may register the first mobile device after the user adds it to the user profile. For example, the backend computer program may generate a unique identifier for the first mobile device that may be stored in a database. This unique identifier may also be encrypted and/or stored as a device token on the first mobile device.

At 215, the backend computer program may establish a first mobile trust level for the first mobile device based on user activity with the mobile application. For example, once the user logs into the mobile application successfully, the first mobile device may be associated with the first mobile device trust level. The first mobile device trust level may allow the user to perform actions that require the first mobile device trust level without additional authentication. These actions may include certain low risk actions, such as accessing a balance, viewing past transactions, etc.

At 220, the backend computer program may establish a second mobile device trust level for the first mobile device based on user identity verification. For example, the user may scan an image of the user's driver's license using the mobile application. The backend computer program may verify that the driver's license details match the information in the user's profile.

The second mobile device trust level may allow the user to perform actions that require the second mobile device trust level or the first mobile device trust level without additional authentication. These actions may include actions that have a higher risk level than those that require the first mobile device trust level.

In an embodiment, the backend computer program may receive an image of the user (e.g., a "selfie") and may verify the image against an image of the user on a government-issued identification, such as a driver's license, a passport, etc.

At 225, the backend computer program may establish a third mobile device trust level for the first mobile device based on a user financial instrument verification. For example, the user may enter details for a user financial instrument issued by the backend, such as a card number or a part of the card number (e.g., last four digits), a card verification value (CVV), an expiration date, combinations thereof, etc. In another embodiment, the user may scan an image of the financial instrument, or may tap the financial instrument to the first mobile device and the information may be read by near field communication. The backend computer program may verify that the information read or entered matches that of an issued financial instrument.

The third mobile device trust level may allow the user to perform actions that require the third mobile device trust level, the second mobile device trust level, or the first mobile device trust level without additional authentication. These actions may include actions that have a higher risk level than those that require the second mobile device trust level.

At 230, the backend computer program may establish a fourth mobile device trust level for the first mobile device based on a passage of time. For example, if the user has used the mobile application for a certain amount of time, such as 180 days, without incident, the backend computer program may associate the first mobile device with a fourth mobile device trust level.

The fourth mobile device trust level may allow the user to perform actions that require the fourth mobile device trust level, the third mobile device trust level, the second mobile device trust level, or the first mobile device trust level without additional authentication. These actions may include actions that have a higher risk level than those that require the third mobile device trust level.

It should be noted that these mobile device trust levels are exemplary only, and other mobile device trust levels and requirements may be used as is necessary and/or desired. Additional mobile device trust levels based on additional authentication may be provided as is necessary and/or desired.

At 235, the user may remove the first mobile device from the user profile. The user may do this when the user loses the first mobile device, upgrades to a second mobile device, etc.

At 240, the backend computer program may revoke the trust for the first mobile device. Thus, if the first mobile device is used again, it will not have any trust associated with it, and any action may require additional authentication.

At 245, the user may add a second mobile device to the user profile. For example, the user may download the mobile application onto the second mobile device and may add the second mobile device to the user's profile.

At 250, if the user used a cloud backup or transferred data directly from the first mobile device, at 255, the backend computer program may transfer the current mobile device trust level for the first mobile device to the second mobile device.

At 260, if the user did not use a cloud backup or did not transfer data directly from the first mobile device, the backend computer may program establish the first mobile device trust level for second mobile device after passage of time. For example, after the passage of a certain amount of time (e.g., 90 days, or any suitable period of time), if the first mobile device is not being used, the established mobile device trust level for the first mobile device may be transferred to the second mobile device.

The user may independently increase the mobile device trust level for the second mobile device through the steps described above.

In an embodiment, if at any time the mobile application or the backend computer program identifies that the mobile device is being misused or could be compromised, (e.g., jailbroken, malware installed, etc.), the backend computer program may revoke all trust in the mobile device.

In an embodiment, if a mobile device is not used for a certain amount of time, has a number of failed logins, is outside of a normal operating area for a prolonged period, the backend computer program may depreciate the mobile device trust level in the mobile device. In an embodiment, the mobile device trust level may be depreciated by one level, or by any suitable amount.

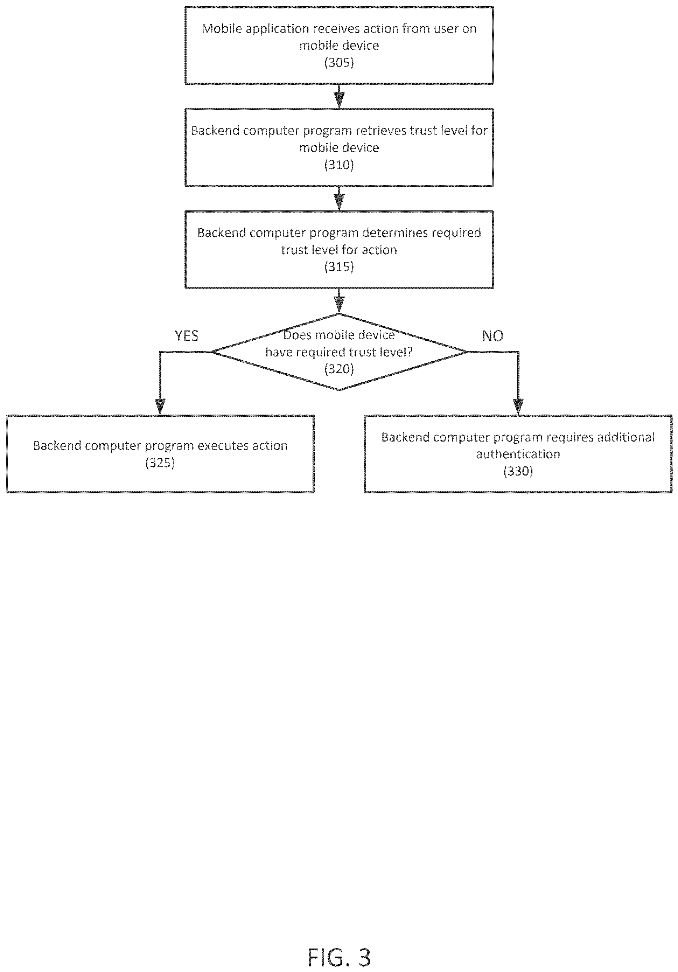

Referring to FIG. 3, a method for reducing friction using mobile device mobile device trust levels is disclosed according to an embodiment.

At 305, a mobile application on a mobile device may receive an action from a user. For example, the action may be to access account details, to make a payment, to make a transfer, to manage an account, to provision cards to a wallet, to perform self-service demographic changes, to redeem rewards, etc.

At 310, the backend computer program may retrieve a mobile device trust level for the mobile device. For example, the backend computer program may retrieve the mobile device trust level from a database.

At 315, the backend computer program may determine a required mobile device trust level for the action. The required mobile device trust level may be based on an amount of risk. For example, accessing an account statement may be low risk and may require a low mobile device trust level (e.g., level 1), while making a large dollar transfer may be high risk and may require a higher mobile device trust level (e.g., level 4).

If, at 320, the mobile device trust level meets the required level, at 325, the backend computer program may execute the action.

If, at 320, the mobile device trust level does not meet the required level, at 330, the backend computer program may require additional authentication (e.g., biometric authentication, out-of-band authentication, etc.) before executing the transaction.

Exemplary use cases are as follows.

As one example, the backend computer program may monitor the mobile device for suspicious activity that may indicate a device is being misused or targeted for takeover by a fraudster. If misuse is detected (e.g., abnormal behavior, device deletion from profile), the backend computer program may revoke the mobile device trust level of the device, resetting it to the initial state. Any subsequent actions from the device will require additional authentication, preventing unauthorized access or fraudulent transactions.

As another example, users may have linked accounts, such as a parent managing a child's account. The backend computer program may assign different mobile device trust levels to each mobile device. For example, a parent's device may have a mobile device trust level, allowing for broader account management, while a child's device may have a lower mobile device trust level, restricting certain actions or requiring additional authentication for high-risk activities.

As another example, a user may change the SIM card in their mobile device, which can be a sign of account compromise, or it may be a legitimate activity. The backend computer program may detect the SIM change and re-evaluate the mobile device trust level for the mobile device. Depending on risk policies, the mobile device trust level may be depreciated (e.g., lowered) or require re-verification (e.g., identity check, financial instrument verification) before restoring previous mobile device trust levels. This helps prevent unauthorized access if a fraudster attempts to hijack the device via SIM swap.

As another example, biometric authentication (e.g., fingerprint, facial recognition) provided by mobile devices may be used as a factor in increasing mobile device trust levels. For example, actions requiring higher trust (e.g., large transactions, sensitive account changes) may be permitted without additional friction if biometric authentication is present and verified. If biometric authentication is disabled or fails, the system may require additional authentication or lower the mobile device trust level.

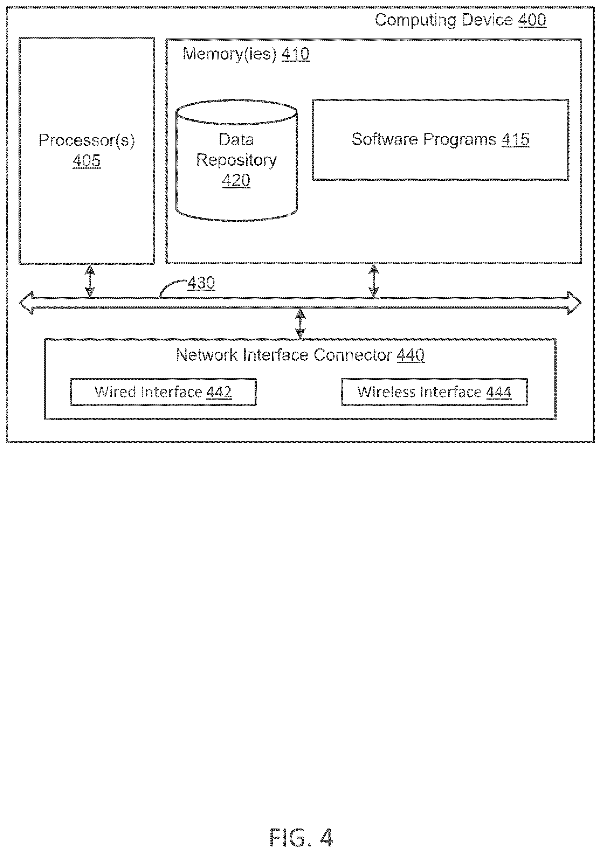

FIG. 4 depicts an exemplary computing system for implementing aspects of the present disclosure. FIG. 4 depicts exemplary computing device 400. Computing device 400 may represent the system components described herein. Computing device 400 may include processor 405 that may be coupled to memory 410. Memory 410 may include volatile memory. Processor 405 may execute computer-executable program code stored in memory 410, such as software programs 415. Software programs 415 may include one or more of the logical steps disclosed herein as a programmatic instruction, which may be executed by processor 405. Memory 410 may also include data repository 420, which may be nonvolatile memory for data persistence. Processor 405 and memory 410 may be coupled by bus 430. Bus 430 may also be coupled to one or more network interface connectors 440, such as wired network interface 442 or wireless network interface 444. Computing device 400 may also have user interface components, such as a screen for displaying graphical user interfaces and receiving input from the user, a mouse, a keyboard and/or other input/output components (not shown).

Hereinafter, general aspects of implementation of the systems and methods of embodiments will be described.

Embodiments of the system or portions of the system may be in the form of a "processing machine," such as a general-purpose computer, for example. As used herein, the term "processing machine" is to be understood to include at least one processor that uses at least one memory. The at least one memory stores a set of instructions. The instructions may be either permanently or temporarily stored in the memory or memories of the processing machine. The processor executes the instructions that are stored in the memory or memories in order to process data. The set of instructions may include various instructions that perform a particular task or tasks, such as those tasks described above. Such a set of instructions for performing a particular task may be characterized as a program, software program, or simply software.

In an embodiment, the processing machine may be a specialized processor.

In an embodiment, the processing machine may be a cloud-based processing machine, a physical processing machine, or combinations thereof.

As noted above, the processing machine executes the instructions that are stored in the memory or memories to process data. This processing of data may be in response to commands by a user or users of the processing machine, in response to previous processing, in response to a request by another processing machine and/or any other input, for example.

As noted above, the processing machine used to implement embodiments may be a general-purpose computer. However, the processing machine described above may also utilize any of a wide variety of other technologies including a special purpose computer, a computer system including, for example, a microcomputer, mini-computer or mainframe, a programmed microprocessor, a micro-controller, a peripheral integrated circuit element, a CSIC (Customer Specific Integrated Circuit) or ASIC (Application Specific Integrated Circuit) or other integrated circuit, a logic circuit, a digital signal processor, a programmable logic device such as a FPGA (Field-Programmable Gate Array), PLD (Programmable Logic Device), PLA (Programmable Logic Array), or PAL (Programmable Array Logic), or any other device or arrangement of devices that is capable of implementing the steps of the processes disclosed herein.

The processing machine used to implement embodiments may utilize a suitable operating system.

It is appreciated that in order to practice the method of the embodiments as described above, it is not necessary that the processors and/or the memories of the processing machine be physically located in the same geographical place. That is, each of the processors and the memories used by the processing machine may be located in geographically distinct locations and connected so as to communicate in any suitable manner. Additionally, it is appreciated that each of the processor and/or the memory may be composed of different physical pieces of equipment. Accordingly, it is not necessary that the processor be one single piece of equipment in one location and that the memory be another single piece of equipment in another location. That is, it is contemplated that the processor may be two pieces of equipment in two different physical locations. The two distinct pieces of equipment may be connected in any suitable manner. Additionally, the memory may include two or more portions of memory in two or more physical locations.

To explain further, processing, as described above, is performed by various components and various memories. However, it is appreciated that the processing performed by two distinct components as described above, in accordance with a further embodiment, may be performed by a single component. Further, the processing performed by one distinct component as described above may be performed by two distinct components.

In a similar manner, the memory storage performed by two distinct memory portions as described above, in accordance with a further embodiment, may be performed by a single memory portion. Further, the memory storage performed by one distinct memory portion as described above may be performed by two memory portions.

Further, various technologies may be used to provide communication between the various processors and/or memories, as well as to allow the processors and/or the memories to communicate with any other entity; i.e., so as to obtain further instructions or to access and use remote memory stores, for example. Such technologies used to provide such communication might include a network, the Internet, Intranet, Extranet, a LAN, an Ethernet, wireless communication via cell tower or satellite, or any client server system that provides communication, for example. Such communications technologies may use any suitable protocol such as TCP/IP, UDP, or OSI, for example.

As described above, a set of instructions may be used in the processing of embodiments. The set of instructions may be in the form of a program or software. The software may be in the form of system software or application software, for example. The software might also be in the form of a collection of separate programs, a program module within a larger program, or a portion of a program module, for example. The software used might also include modular programming in the form of object-oriented programming. The software tells the processing machine what to do with the data being processed.

Further, it is appreciated that the instructions or set of instructions used in the implementation and operation of embodiments may be in a suitable form such that the processing machine may read the instructions. For example, the instructions that form a program may be in the form of a suitable programming language, which is converted to machine language or object code to allow the processor or processors to read the instructions. That is, written lines of programming code or source code, in a particular programming language, are converted to machine language using a compiler, assembler or interpreter. The machine language is binary coded machine instructions that are specific to a particular type of processing machine, i.e., to a particular type of computer, for example. The computer understands the machine language.

Any suitable programming language may be used in accordance with the various embodiments. Also, the instructions and/or data used in the practice of embodiments may utilize any compression or encryption technique or algorithm, as may be desired. An encryption module might be used to encrypt data. Further, files or other data may be decrypted using a suitable decryption module, for example.

As described above, the embodiments may illustratively be embodied in the form of a processing machine, including a computer or computer system, for example, that includes at least one memory. It is to be appreciated that the set of instructions, i.e., the software for example, that enables the computer operating system to perform the operations described above may be contained on any of a wide variety of media or medium, as desired. Further, the data that is processed by the set of instructions might also be contained on any of a wide variety of media or medium. That is, the particular medium, i.e., the memory in the processing machine, utilized to hold the set of instructions and/or the data used in embodiments may take on any of a variety of physical forms or transmissions, for example. Illustratively, the medium may be in the form of a compact disc, a DVD, an integrated circuit, a hard disk, a floppy disk, an optical disc, a magnetic tape, a RAM, a ROM, a PROM, an EPROM, a wire, a cable, a fiber, a communications channel, a satellite transmission, a memory card, a SIM card, or other remote transmission, as well as any other medium or source of data that may be read by the processors.

Further, the memory or memories used in the processing machine that implements embodiments may be in any of a wide variety of forms to allow the memory to hold instructions, data, or other information, as is desired. Thus, the memory might be in the form of a database to hold data. The database might use any desired arrangement of files such as a flat file arrangement or a relational database arrangement, for example.

In the systems and methods, a variety of "user interfaces" may be utilized to allow a user to interface with the processing machine or machines that are used to implement embodiments. As used herein, a user interface includes any hardware, software, or combination of hardware and software used by the processing machine that allows a user to interact with the processing machine. A user interface may be in the form of a dialogue screen for example. A user interface may also include any of a mouse, touch screen, keyboard, keypad, voice reader, voice recognizer, dialogue screen, menu box, list, checkbox, toggle switch, a pushbutton or any other device that allows a user to receive information regarding the operation of the processing machine as it processes a set of instructions and/or provides the processing machine with information. Accordingly, the user interface is any device that provides communication between a user and a processing machine. The information provided by the user to the processing machine through the user interface may be in the form of a command, a selection of data, or some other input, for example.

As discussed above, a user interface is utilized by the processing machine that performs a set of instructions such that the processing machine processes data for a user. The user interface is typically used by the processing machine for interacting with a user either to convey information or receive information from the user. However, it should be appreciated that in accordance with some embodiments of the system and method, it is not necessary that a human user actually interact with a user interface used by the processing machine. Rather, it is also contemplated that the user interface might interact, i.e., convey and receive information, with another processing machine, rather than a human user. Accordingly, the other processing machine might be characterized as a user. Further, it is contemplated that a user interface utilized in the system and method may interact partially with another processing machine or processing machines, while also interacting partially with a human user.

It will be readily understood by those persons skilled in the art that embodiments are susceptible to broad utility and application. Many embodiments and adaptations of the present invention other than those herein described, as well as many variations, modifications and equivalent arrangements, will be apparent from or reasonably suggested by the foregoing description thereof, without departing from the substance or scope.

Accordingly, while the embodiments of the present invention have been described here in detail in relation to its exemplary embodiments, it is to be understood that this disclosure is only illustrative and exemplary of the present invention and is made to provide an enabling disclosure of the invention. Accordingly, the foregoing disclosure is not intended to be construed or to limit the present invention or otherwise to exclude any other such embodiments, adaptations, variations, modifications or equivalent arrangements.

## Claims

1. A method, comprising:
receiving, by a backend computer program executed by an electronic device, a registration of a first mobile device for a user, wherein the first mobile device executes a mobile application;
adding, by the backend computer program, the first mobile device to a user profile associated with the user;
establishing, by the backend computer program, a first mobile device trust level for the first mobile device based on activity with the mobile application, wherein the first mobile device trust level allows the user to execute a first action that requires the first mobile device trust level without additional authentication;
receiving, by the backend computer program, user identity verification from the mobile application;
establishing, by the backend computer program, a second mobile device trust level for the first mobile device based on the user identity verification, wherein the second mobile device trust level allows the user to execute a second action that requires the second mobile device trust level or the first mobile device trust level without additional authentication;
receiving, by the backend computer program, a removal of the first mobile device from the user profile; and
revoking, by the backend computer program, the second mobile device trust level and the first mobile device trust level from the first mobile device, wherein executing the first action or the second action requires additional authentication.

2. The method of claim 1, wherein the user identity verification comprises:
receiving an image of the user; and
verifying the image of the user against an image of the user on a government issued identification.

3. The method of claim 1, further comprising:
receiving, by the backend computer program, financial instrument verification from the mobile application; and
establishing, by the backend computer program, a third mobile device trust level for the first mobile device based on the financial instrument verification, wherein the third mobile device trust level allows the user to execute a third action that requires the third mobile device trust level, the second mobile device trust level, or the first mobile device trust level without additional authentication.

4. The method of claim 3, wherein the financial instrument verification comprises receiving financial instrument information for a financial instrument, and receiving confirmation that the financial instrument information matches financial instrument information for an issued financial instrument, wherein the financial instrument information comprises at least part of a financial instrument number for a financial instrument, a card verification value for the financial instrument, and/or an expiration of the financial instrument.

5. The method of claim 4, wherein the financial instrument information is received by near field communication.

6. The method of claim 3, further comprising:
establishing, by the backend computer program, a fourth mobile device trust level for the first mobile device based on a passage of time, wherein the fourth mobile device trust level allows the user to execute a fourth action that requires the fourth mobile device trust level, the third mobile device trust level, the second mobile device trust level, or the first mobile device trust level without additional authentication.

7. The method of claim 1, further comprising:
receiving, by the backend computer program, a registration of a second mobile device for the user;
adding, by the backend computer program, the second mobile device to the user profile; and
transferring, by the backend computer program, the second mobile device trust level to the second mobile device in response to the second mobile device receiving data from the first mobile device by cloud backup or directly from the first mobile device.

8. The method of claim 1, further comprising:
receiving, by the backend computer program, a registration of a second mobile device for the user;
adding, by the backend computer program, the second mobile device to the user profile; and
transferring, by the backend computer program, the second mobile device trust level to the second mobile device in response to a passage of a certain amount of time.

9. The method of claim 1, further comprising:
revoking, by the backend computer program, the second mobile device trust level and the first mobile device trust level in response to the backend computer program identifying the first mobile device as being jailbroken or having malware installed.

10. The method of claim 1, further comprising:
depreciating, by the backend computer program, the second mobile device trust level to the first mobile device trust level in response to a certain number of failed logins to the mobile application.

11. A system, comprising:
a backend computer program executed by an electronic device; and
a first mobile device for a user executing a mobile application;
wherein the backend computer program is configured to:
receive, from the mobile application executed by the first mobile device, registration of the first mobile device;
add the first mobile device to a user profile for the user;
establish a first mobile device trust level for the first mobile device based on activity with the mobile application, wherein the first mobile device trust level allows the user to execute a first action that requires the first mobile device trust level without additional authentication;
receive user identity verification from the mobile application;
establish a second mobile device trust level for the first mobile device based on the user identity verification, wherein the second mobile device trust level allows the user to execute a second action that requires the second mobile device trust level or the first mobile device trust level without additional authentication;
receive a removal of the first mobile device from the user profile; and
revoke the second mobile device trust level and the first mobile device trust level from the first mobile device, wherein executing the first action or the second action requires additional authentication.

12. The system of claim 11, wherein the user identity verification comprises:
receiving an image of the user; and
verifying the image of the user against an image of the user on a government issued identification.

13. The system of claim 11, wherein the backend computer program is configured to:
receive financial instrument verification from the mobile application; and
establish a third mobile device trust level for the first mobile device based on the financial instrument verification, wherein the third mobile device trust level allows the user to execute a third action that requires the third mobile device trust level, the second mobile device trust level, or the first mobile device trust level without additional authentication.

14. The system of claim 13, wherein the financial instrument verification comprises receiving financial instrument information for a financial instrument, and receiving confirmation that the financial instrument information matches financial instrument information for an issued financial instrument, wherein the financial instrument information comprises at least part of a financial instrument number for a financial instrument, a card verification value for the financial instrument, and/or an expiration of the financial instrument.

15. The system of claim 14, wherein the financial instrument information is received by near field communication.

16. The system of claim 13, wherein the backend computer program is further configured to establish a fourth mobile device trust level for the first mobile device based on a passage of time, wherein the fourth mobile device trust level allows the user to execute a fourth action that requires the fourth mobile device trust level, the third mobile device trust level, the second mobile device trust level, or the first mobile device trust level without additional authentication.

17. The system of claim 11, wherein the backend computer program is configured to:
receive a registration of a second mobile device for the user;
add the second mobile device to the user profile; and
transfer the second mobile device trust level to the second mobile device in response to the second mobile device receiving data from the first mobile device by cloud backup or directly from the first mobile device.

18. The system of claim 11, wherein the backend computer program is configured to:
receive a registration of a second mobile device for the user;
add the second mobile device to the user profile; and
transfer the second mobile device trust level to the second mobile device in response to a passage of a certain amount of time.

19. The system of claim 11, wherein:
the backend computer program is configured to revoke the second mobile device trust level and the first mobile device trust level in response to the backend computer program identifying the first mobile device as being jailbroken or having malware installed, or to depreciate the second mobile device trust level to the first mobile device trust level in response to a certain number of failed logins to the mobile application.

20. A non-transitory computer readable storage medium, including instructions stored thereon, which when read and executed by one or more computer processors, cause the one or more computer processors to perform steps comprising:
receiving a registration of a first mobile device for a user, wherein the first mobile device executes a mobile application;
adding the first mobile device to a user profile for the user;
establishing a first mobile device trust level for the first mobile device based on activity with the mobile application, wherein the first mobile device trust level allows the user to execute a first action that requires the first mobile device trust level without additional authentication;
receiving user identity verification from the mobile application;
establishing a second mobile device trust level for the first mobile device based on the user identity verification, wherein the second mobile device trust level allows the user to execute a second action that requires the second mobile device trust level or the first mobile device trust level without additional authentication;
receiving a removal of the first mobile device from the user profile; and
revoking the second mobile device trust level and the first mobile device trust level from the first mobile device, wherein execution of the first action or the second action requires additional authentication.
